# EUROPEAN PATENT SPECIFICATION

(11) **EP 0 523 438 B1**
(45) Date of publication and mention of the grant of the patent: **04.02.1998**
(21) Application number: 92110978.1
(22) Date of filing: 29.06.1992
(51) Int. Cl.: G06F 11/26

(54) **Microcomputer with boundary-scan facility**
Mikrorechner mit "Boundary-Scan"-Gerät
Microcalculatrice avec un dispositif de "Boundary-scan"

(30) Priority: 12.07.1991 GB 9115097
(43) Date of publication of application: 20.01.1993
(73) Proprietor: MOTOROLA, INC., Schaumburg, IL 60196 (US)
(72) Inventor: Bron, Michel, CH-1006 Lausanne (CH); McGinn, Peter, Newton Mearns, Glasgow Scotland (GB)
(74) Representative: Dunlop, Hugh Christopher

(56) References cited:
- PROCEEDINGS OF THE INTERNATIONAL TEST CONFERENCE 1989 31 August 1989, SHERATON HOTEL, WASHINGTON, DC pages 615 - 623 , XP89992 WALLACE HARWOOD ET AL. 'Testability Features Of The MC68332 Modular Microcontroller'
- PROCEEDINGS OF THE INTERNATIONAL TEST CONFERENCE 1987 3 September 1987, SHERATON HOTEL, WASHINGTON, DC pages 810 - 817 W. R. OLSON ET AL. 'Implementing Built-In Self-Test in a RISC Microprocessor'

## Description

### Field of the Invention

This invention relates to microprocessors, especially microcomputers, having a boundary scan facility.

### Background of the Invention

Boundary scanning is a known technique for testing the integrity of connections of a chip to a circuit board and a Standard has been published, IEEE Std. 1149.1-1990, "IEEE Standard Test Access Port and Boundary-Scan Architecture". The boundary-scan technique involves the inclusion of a shift-register stage (contained in a boundary-scan cell) adjacent to each component pin so that signals at component boundaries can be controlled and observed using scan testing principles.

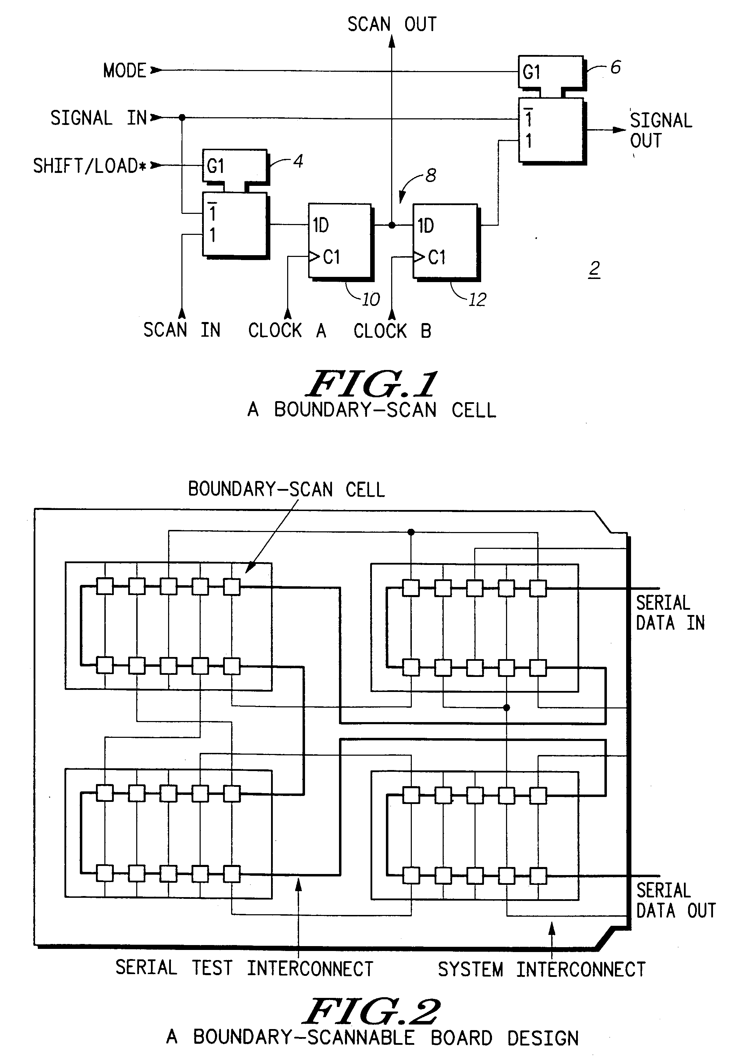

Fig. 1 illustrates an example implementation for a boundary-scan cell 2 that could be used for input or output connections to an integrated circuit. Dependent on the control signals applied to multiplexers 4, 6, data can either be loaded into the scan register 8 comprising first and second flip flops 10, 12 from the Signal-in port (e.g., the input pin), or driven from the register through the Signal-out port of the cell. The second flip flop 12 controlled by input Clock B is provided to ensure that the signals driven out of the cell in the latter case are held while new data is shifted into the first flip flop 10 using input Clock A.

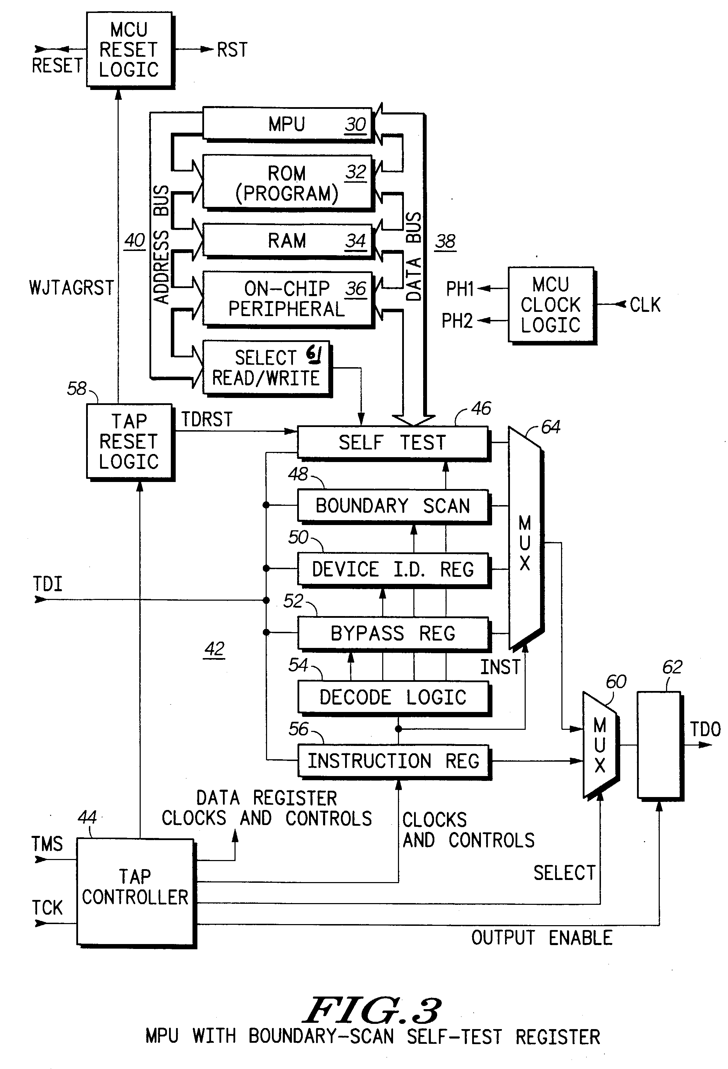

The boundary-scan cells for the pins of a component are interconnected so as to form a shift-register chain around the border of the design, and this path is provided with serial input and output connections and appropriate clock and control signals. Within a product assembled from several integrated circuits the boundary-scan registers for the individual components could be connected in series to form a single path through the complete design, as illustrated in Fig. 2. Alternatively, a board design could contain several independent boundary-scan paths.

If all the components used to construct a circuit have a boundary-scan register, then the resulting serial path through the complete design can be used in two ways:
(a) To allow the interconnections between the various components to be tested, test data can be shifted into all the boundary-scan register cells associated with component output pins and loaded in parallel through the component interconnections into those cells associated with input pins; and
(b) To allow the components on the board to be tested, the boundary-scan register can be used as a means of isolating on-chip system logic from stimuli received from surrounding components while an internal self-test is performed.

It is therefore desirable that a microprocessor have incorporated within it a boundary scan facility.

Built in self testing is also a desirable feature which has in the past been incorporated in a microprocessor.

Boundary testing of the modules of a particular microcontroller is known from Proceedings of the International Test Conference 1989, 31 August 1989, Washington D.C., U.S.A., Harwood et al. "Testability Features of the MC68332 Modular Microcontroller", pages 615-623.

### Summary of the Invention

It is an object of the invention to incorporate in a microprocessor architecture a boundary scan facility together with a self test facility, in an efficient and economic manner.

In accordance with the present invention there is provided a microprocessor as claimed in claim 1.

As preferred the microprocessor comprises a single chip microcomputer with processing unit, memory and dedicated peripherals.

The processing unit self-test means may comprise the processing unit of the microprocessor together with test algorithms stored in memory.

The self test register may be a single register in which both self test codes and results are written or alternatively may comprise one register for the code and a separate register for the results.

### Brief Description of the Drawings

A preferred embodiment of the invention will now be described with reference to the accompanying drawings wherein:-
Figure 1 is a circuit diagram of a known boundary scan register cell;
Figure 2 is a schematic of a boundary scan test configuration;
Figure 3 is a schematic diagram of a microcomputer incorporating a boundary scan and built in test facility;
Figure 4 is a schematic diagram of a cell of a boundary scan self-test register;
Figure 5 is a flow chart of the boundary scan and test mechanisms according to the invention; and
Figure 6 is a block diagram of boundary scan self test reset logic.

### Description of the Preferred Embodiment

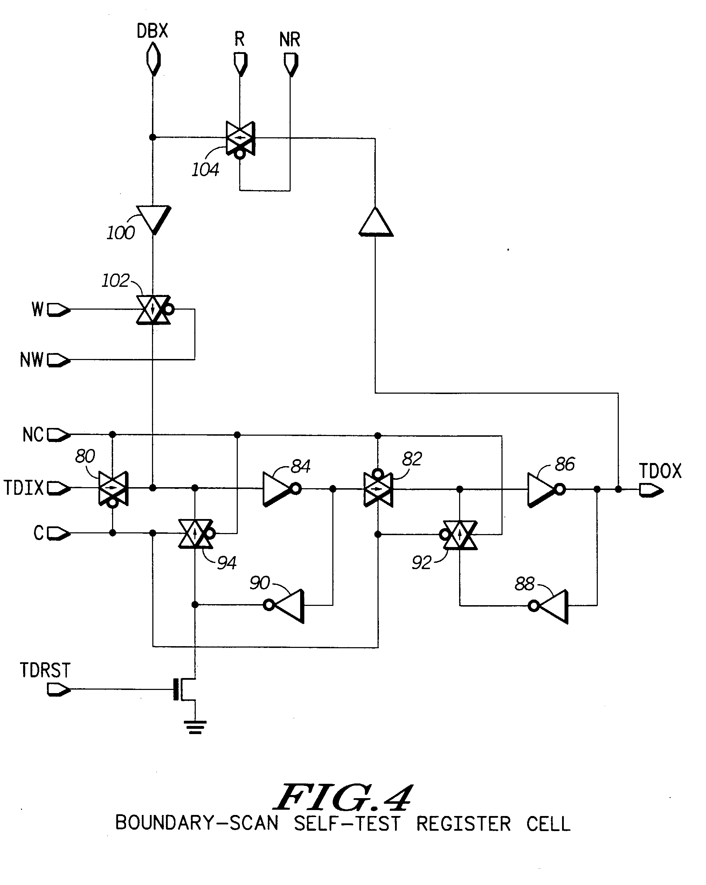

Referring now to Figure 3, there is shown a single chip 8-bit microcomputer unit (MCU), which includes on the same die a microprocessor unit 30, memories for data and instructions comprising a ROM 32, a RAM 34 and on-chip-peripherals 36. A data bus 38 and address bus 40 are provided. In addition, a boundary scan logic 42 is provided. The logic includes a controller 44 named a test access port (TAP).TAP 44 receives input clock signals TMS/TCK in order to control a set of registers comprising a self-test register 46, a boundary scan register 48 (each cell associated with a respective terminal pin), a device ID register 50, a bypass register 52, a decode logic register 54, and an instruction register 56. TAP controller 44 also controls reset logic 58 and an output multiplexer 60 and an output gate 62. The registers 46-56 are coupled to receive an input signal TDI, and provide as an output via multiplexer 64 and multiplexer 60, an output signal TDO.

Self-test register 46 has a length which can vary from application to application. In this 8-bit MCU it has 8 data bits. This register has a serial access by the boundary scan test circuitry and a parallel access from MCU bus 38. A reset signal TDRST from Reset logic 58 allows the simultaneous clearing of all the bits in this register.

A select read/write circuit 61 permits reading/writing to register 46.

The TDI to TDO connection through the self-test register forms the serial access. The parallel MCU interface consists of the data bus 38 and the appropriate register read and write signals.

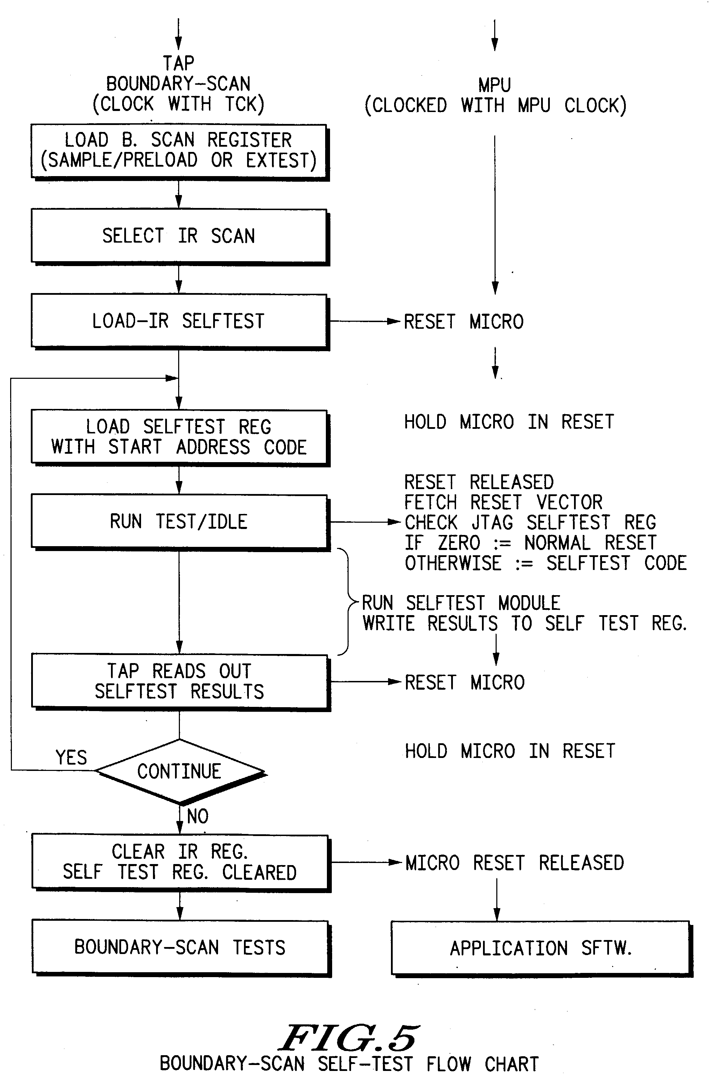

Figure 4 shows one of the 8 self-test register cells. The letter X in the signal names can be considered as an index of the bit position in the register. The output TDOX line of one cell is connected to the input TDIX of the next cell forming a shift register. The TDIX port is coupled via transmission gates 80, 82 and inverters 84, 86 to a TDOX port. Gates 80, 82 are of the type having n-channel and p-channel FET's coupled in parallel. Feedback loops are provided from inverters 84, 86 comprising inverters 88, 90 and gates 92, 94 respectively for storage of data. The group of all the DBX signals of each cell forms the parallel data bus 38, and data is written via buffer 100 and gate 102. The W and NW signals are the MPU write controls to the register. Similarly R and NR are the read controls for application to gate 104. C and NC are the boundary scan clocks for shifting the stored data in a serial way and are coupled to gate 80, 82, 92, 94. These clocks are derived from the TCK clock.

Referring to Figure 5 which shows a flowchart of one mode of operation of the boundary scan and self test logic, the first action carried out by the TAP logic means 44 is that the boundary scan register is loaded so that during self test the pin status is defined by the register in accordance with the IEEE Standard. The next phase of operation is to select the instruction register 56 in order to load a self test instruction into the register 56. At the same time the microprocessor is reset via reset logic 58. The instruction is loaded into the self test register 46 by the serial data line TDI by means of TAP logic 44. A code for the selection of a self test is loaded into the self test register in order that the test be carried out and the TAP logic is then set to RUN TEST/IDLE STATE. This releases the processor reset signal and the test software will execute. The processor will read the code of the self test and then jump to the corresponding module of the self test routine. This could for example be a test of the CPU instructions, of the memory blocks or of an on-chip peripheral. It cannot be a test that requires a pin logic level change, by definition of the IEEE Standard. At the end of a self test, the microprocessor will writeback the self test result (pass or fail); the boundary scan reads this result serially. As many self test modules as necessary are carried out by looping through these operations and at the end of the software test, the self test register is cleared together with the instruction register. This clearing is detected by the microprocessor and the microprocessor is reset by reset logic 58.

Loading the self-test register with a value that defines which test module will be executed is performed by the boundary scan serial loading capability. Similarly, the reading of the self-test result out of the register is made by the boundary scan shift.

While the self-test register is loaded, the MPU is kept in a Reset state. When the TAP circuitry reaches the "RUN TEST/IDLE" state, the MPU reset is released and the program will look at the self-test register contents.

In a normal application, when no boundary scan testing takes place, the MPU is expecting a cleared self-test register after reset. Therefore, the self-test register is cleared by the MPU reset signal, except if this signal is generated by the TAP circuitry.

It is important to note in the flowchart of Figure 5 that the boundary scan circuitry and the MPU are independently and operate with their own clocks. For the self-test, the only links are the self-test register and the Reset circuitry.

If the test module ends normally, it writes a test result to the self-test register and jumps in a waiting loop. At this time, the TAP is re-activated to shift out the contents of the self-test register. This also resets the MPU.

A sequence of test modules can be tested like this by shifting different test codes in the test register. The duration of each test module has to be described as a number of MPU clock cycles so that the TAP re-activation at the end of a test can be done with a sufficient delay.

As described above, the TAP must generate an MPU reset before the self-test software modules are executed. Also, the self-test register must be cleared by any MPU reset except by the TAP generated reset. More specifically:

When an external reset is applied on the top left RESET signal, this does reset both the MCU and the self test register. When the MCU reset (RST) is released, the MCU program executes from the ROM. This program first checks the self test register contents. If cleared by Reset the normal user program is executed. If a value is in the self-test register the corresponding self test program (in ROM) is executed. This cannot happen in this case, where the RESET pin is activated either by an external Reset or an MCU generated Reset.

When the reset is generated by the boundary scan TAP controller, the MCU is reset and the RESET pin is activated. But the self test register IS NOT cleared by this reset. This allows the serial load of the self test register. When this TAP generated reset is released the MCU will execute the same program, but finds a non-cleared self test register and executes the corresponding self test.

An external RESET, is the MCU normal mode of operation with boundary scan non-active.

A reset generated by the self test is a special test for boundary scan controlled operation of the MCU.

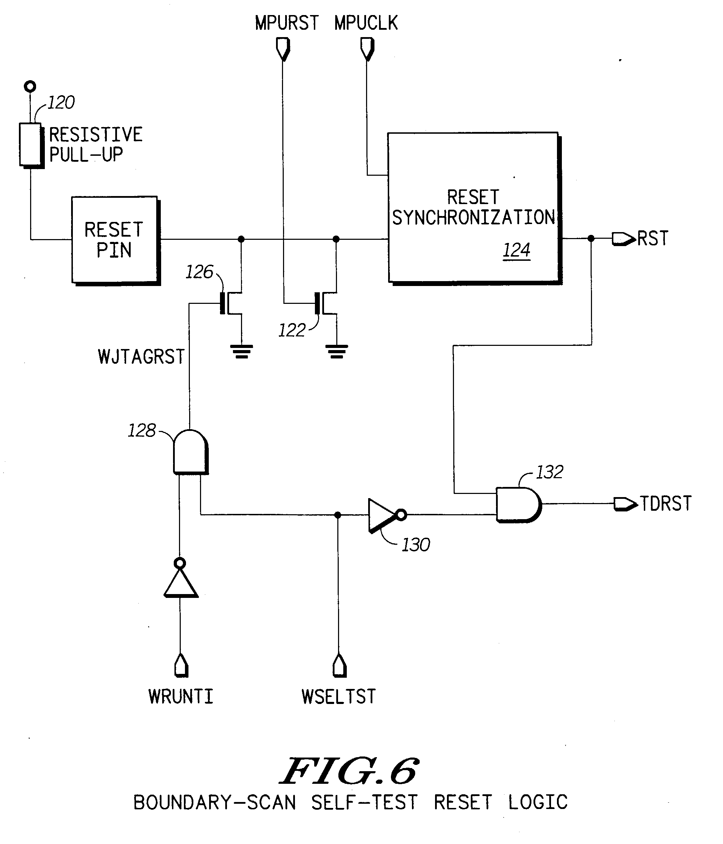

A logic implementation of this function is presented in Figure 6.

The RESET pin with an external pull-up resistor 120, the MPURST pull-down FET 122 are provided. An external Reset can be applied by pulling the RESET pin low. Internal MPU resets (i.e. Watchdog or Power-on detector) will activate the MPURST signal that also pulls the pin RESET low. MPUCLK is a clock of the MPU circuitry which synchronizes via unit 124 the reset pin signal in order to provide the signal RST, which is the internal reset signal for the MPU.

A WJTAGRST pull-down transistor 126 on the RESET pin allows an MPU reset to be generated by the TAP circuitry. The TDRST signal will clear the self-test register. WRUNTI signal is active when the RUN TEST/IDLE state is reached. WSELTST is active when the TAP instruction register contains the self-test code. These signals are applied to transistor 126 via gate 128.

When the TAP Instruction register is loaded with self-test instruction the WJTAGRST will pull the RESET pin low. This generates an MPU reset RST. The RST will not activate TDRST in this mode. TDRST is activated when signal WSEWST is low, this signal being coupled via inverter 130 and gate 132 to the RST signal. When the RUN TEST/IDLE state is reached, the MPU reset is released and the self-test software modules can be executed.

## Claims

1. A microprocessor including:
a processsing unit (30);
a plurality of external connector terminals;
boundary scan means (42) including a boundary scan shift register (48) having a respective shift register cell associated with each one of the said plurality of external connector terminals;
a processing unit self test means;
and characterised by
a logic means;
a self test register (46) coupled to the said processsing unit self test means and to the said boundary scan means (42) for, during a self-test mode of operation, initiating operation of the processing unit self test means via the boundary scan means in that said logic means selectively writes data into said self test register (46).

2. A microprocessor as claimed in claim 1, comprising a single chip microcomputer with processing unit, a memory (32, 34) and dedicated peripherals (36).

3. A microprocessor as claimed in claim 1 wherein the processsing unit self test means comprises the processor unit (30) of the microprocessor together with test algorithms stored in said memory (32, 34).

4. A microprocessor as claimed in claim 1, wherein the said boundary scan means (42) comprises an array of logic gates for automatically carrying out predefined sequences of operation in response to one or more clock input signals for sequencing the operation thereof.

5. A microprocessor as claimed in claim 1 including an instruction register (56), the boundary scan means being operative to insert a data instruction into the said instruction register (56), and being responsive to such instruction to write appropriate data into the boundary scan register (48) and/or self test register (46) whereby aproppriate modes of operation can be executed.

6. A microprocessor as claimed in any preceding claim wherein the said registers are arranged to receive serial data from the boundary scan means (42) and the self test register (46) is arranged in addition to receive parallel data from the processing unit (30).

7. A microprocessor as claimed in any preceding claim further comprising reset means (58) for resetting the processing unit in the event of a self test.

## Patentansprüche

1. Mikroprozessor mit:
einer Verarbeitungseinheit (30);
einer Vielzahl von externen Verbindungsterminals;
einer Grenzabtasteinrichtung (42) mit einem Grenzabtastschieberegister (48) mit einer jeweiligen Schieberegisterzelle, welche jeweils einem der Vielzahl von externen Verbindungsterminals zugeordnet ist;
einer Verarbeitungseinheit-Selbsttesteinrichtung; und
gekennzeichnet durch
eine Logikeinrichtung;
ein Selbsttestregister (46), welches mit der Verarbeitungseinheit-Selbsttesteinrichtung und mit der Grenzabtasteinrichtung (42) verbunden ist, zum Iniziieren des Betriebs der Verarbeitungseinheit-Selbsttesteinrichtung über die Grenzabtasteinrichtung während eines Selbsttest-Betriebsmodus,
wobei die Logikeinrichtung selektiverweise Daten in das Selbsttestregister (46) schreibt.

2. Mikroprozessor nach Anspruch 1 mit einem Einzelchip-Mikrocomputer mit einer Verarbeitungseinheit, einem Speicher (32, 34) und zugeordneten Peripheriegeräten (36).

3. Mikroprozessor nach Anspruch 1, dadurch gekennzeichnet, daß die Verarbeitungseinheit-Selbsttesteinrichtung die Prozessoreinheit (30) des Mikroprozessors zusammen mit in dem Speicher (32, 34) gespeicherten Testalgorithmen umfaßt.

4. Mikroprozessor nach Anspruch 1, dadurch gekennzeichnet, daß die Grenzabtasteinrichtung (42) ein Feld von Logikgattern zum automatischen Ausführen vordefinierter Sequenzen von Betriebsschritten ansprechend auf ein oder mehrere Takteingabesignale zur Ablaufsteuerung des Betriebs aufweist.

5. Mikroprozessor nach Anspruch 1, gekennzeichnet durch ein Anweisungsregister (56), wobei die Grenzabtasteinrichtung derart arbeitet, daß sie eine Datenanweisung in das Anweisungsregister (56) einsetzt und auf solch eine Anweisung zum Schreiben geeigneter Daten in das Grenzabtastregister (48) und/oder Selbsttestregister (46) anspricht, wodurch geeignete Betriebsmodi ausführbar sind.

6. Mikroprozessor nach einem der vorangegangenen Ansprüche, dadurch gekennzeichnet, daß die Register derart angeordnet sind, daß sie serielle Daten von der Grenzabtasteinrichtung (42) empfangen und daß das Selbsttestregister (46) zusätzlich so angeordnet ist, daß es parallele Daten von der Verarbeitungseinheit (30) empfängt.

7. Mikroprozessor nach einem der vorangegangenen Ansprüche, gekennzeichnet durch eine Rücksetzeinrichtung (58) zum Rücksetzen der Verarbeitungseinheit im Fall eines Selbsttests.

## Revendications

1. Microprocesseur comportant :
une unité de traitement (30) ;
une pluralité de bornes de connecteurs externes ;
un moyen (42) d'examen sur les bords, comportant un registre à décalage (48) d'examen sur les bords, qui possède une cellule de registre à décalage respective associée avec chaque borne de ladite pluralité de bornes de connecteurs externes ;
un moyen d'auto-contrôle de l'unité de traitement ;
le microprocesseur étant caractérisé par :
un moyen logique ;
un registre d'auto-contrôle (46) couplé audit moyen d'auto-contrôle de l'unité de traitement, et audit moyen d'examen sur les bords (42) afin, pendant un mode de fonctionnement d'auto-contrôle, de faire commencer le fonctionnement du moyen d'auto-contrôle de l'unité de traitement via le moyen d'examen sur les bords, en ce que ledit moyen logique écrit sélectivement des données dans ledit registre d'auto-contrôle (46).

2. Microprocesseur selon la revendication 1, comprenant un micro-ordinateur monopuce ayant une unité de traitement, une mémoire (32, 34), et des périphériques spécialisés (36).

3. Microprocesseur selon la revendication 1, où le moyen d'auto-contrôle de l'unité de traitement comprend l'unité de traitement (30) du microprocesseur, ainsi que des algorithmes de contrôle stockés dans ladite mémoire (32, 34).

4. Microprocesseur selon la revendication 1, où ledit moyen d'examen sur les bords (42) comprend un groupement de portes logiques servant à effectuer automatiquement des séquences prédéfinies de fonctionnement en réponse à un ou plusieurs signaux d'entrée d'horloge, afin de séquencer leur fonctionnement.

5. Microprocesseur selon la revendication 1, comportant un registre d'instructions (56), le moyen d'examen sur les bords ayant pour fonction d'introduire une instruction de données dans ledit registre d'instructions (56), et répondant à cette instruction en écrivant des données appropriées dans le registre d'examen sur les bords (48) et, ou bien, le registre d'auto-contrôle (46), si bien que des modes appropriés de fonctionnement peuvent être exécutés.

6. Microprocesseur selon l'une quelconque des revendications précédentes, où lesdits registres sont conçus pour recevoir des données série de la part du moyen d'examen sur les bords (42), et le registre d'auto-contrôle (46) est conçu en outre pour recevoir des données parallèles de la part de l'unité de traitement (30).

7. Microprocesseur selon l'une quelconque des revendications précédentes, comprenant en outre un moyen de repositionnement (58) servant à repositionner l'unité de traitement dans le cas d'un auto-contrôle.
